# EUROPÄISCHE PATENTSCHRIFT

(11) **EP 3 164 933 B1**
(45) Veröffentlichungstag und Bekanntmachung des Hinweises auf die Patenterteilung: **04.03.2020**
(21) Anmeldenummer: 15729340.8
(22) Anmeldetag: 15.06.2015
(51) Int. Cl.: H02K 15/085

(54) **VERFAHREN UND VORRICHTUNG ZUR HERSTELLUNG EINER ELEKTROMASCHINE**
METHOD AND DEVICE FOR MANUFACTURING AN ELECTRIC MACHINE
PROCÉDÉ ET DISPOSITIF DE PRODUCTION D'UN MOTEUR ÉLECTRIQUE

(30) Priorität: 03.07.2014 DE 102014009799
(43) Veröffentlichungstag der Anmeldung: 10.05.2017
(73) Patentinhaber: Audi AG, 85045 Ingolstadt (DE)
(72) Erfinder: STENZEL, Peer, 85051 Ingolstadt (DE); MIHAJLOVIC, Dragan, 8048 Zürich (CH)
(74) Vertreter: Eickmeyer, Dietmar
(86) Internationale Anmeldenummer: PCT/EP2015/001208
(87) Internationale Veröffentlichungsnummer: WO 2016/000808

(56) Entgegenhaltungen:
- DE-A1- 1 956 420
- DE-A1-102005 037 375
- GB-A- 1 048 719
- JP-A- S 596 750
- US-A- 5 197 685

## Beschreibung

Die vorliegende Erfindung betrifft ein Verfahren und ein Wicklungshilfswerkzeug zur Bewicklung einer Anzahl von Drahtaufnahmen eines Stators und / oder Rotors einer Elektromaschine mit einer Anzahl Drahtlagen nach den Oberbegriffen der Ansprüche 1 bzw. 10.

Elektromotoren, wie bspw. Drehstrom- oder Wechselstrommotoren, umfassen mindestens einen Stator und einen Rotor, der sich innerhalb des Stators dreht. Der Stator besteht meist aus geblechtem Stahl. Weiterhin dient der Stator als Kern für jeweilige Spulen, die sich aus mehreren Drahtlagen zusammensetzen und ein zum Betrieb eines Elektromotors bzw. Generators erforderliches elektromagnetisches Feld zu erzeugen. Durch eine zeitlich versetzte Versorgung der Spulen eines Elektromotors kann auf den Rotor eine Kraft ausgeübt werden, so dass der Rotor sich dreht und Bewegungsenergie abgibt.

Bei Drehstrommotoren werden bspw. in drei getrennten Leitern jeweils eigene periodisch wechselnde Stromspannungen, deren zeitliche Abläufe gegenüber jeweilig anderen Leiterspannungen um jeweils 120 Grad vor bzw. nachlaufend versetzt sind, verwendet.

Da zum Bewegen eines Rotors in der Regel ein starkes Magnetfeld benötigt wird, müssen jeweilige zur Erzeugung des Magnetfelds vorgesehene Spulen einer jeweiligen Elektromaschine sehr dicht gepackt, d. h. eng mit einer Vielzahl von Drahtlagen unter Verwendung sogenannter "verteilter Wicklungen" gewickelt werden, so dass eine hohe Windungszahl entsteht. Bekannte Verfahren und Vorrichtungen für verteilte Wicklungen basieren insbesondere auf einer Verwendung von Endscheiben, die jedoch hohe und voluminöse Wickelköpfen bedingen, so dass unter Verwendung von Endscheiben gewickelte Elektromaschinen einen großen Bauraum benötigen.

Im Stand der Technik sind Verfahren und Vorrichtungen zur Herstellung von Spulen von Elektromaschinen mittels verteilter Wicklungen beschrieben.

Die DE 1 956 420 A1 offenbart als nächstliegender Stand der Technik ein Verfahren und ein Wicklungshilfswerkzeug zur Bewicklung einer Anzahl von Drahtaufnahmen eines Stators und / oder Rotors einer Elektromaschine mit einer Anzahl Drahtlagen nach den Oberbegriffen der Ansprüche 1 bzw. 10.

Die GB 1048719 offenbart eine Vorrichtung zum Wickeln von Statoren schlitzgewickelter rotierender elektrischer Maschinen, wobei die Vorrichtung mehrere Formpaare zum Führen des Drahtes und Formen der Spulenenden aufweist und wobei die Formen jedes Paares zusammenwirken und montierbar sind an den jeweiligen Statorenden während des Umformens einer Spule.

Ein Nadelwickelsystem zum Aufbringen von verteilten Wicklungen auf einen zu bewickelnden Wicklungsträger ist in der deutschen Druckschrift DE 10 2011 008 662 A1 offenbart, wobei ein Schwenkklotz des Nadelwickelsystems entlang eines vollen virtuellen Kreisumfangs schwenkbar angeordnet ist und eine Drahtaustrittsdüse des Nadelwickelsystems stets in ein Zentrum des virtuellen Kreises gerichtet ist und dadurch einen virtuellen Schwenkpunkt definiert.

Eine Drehstrommaschine, an deren Enden Wickelabschnitte und Führungsabschnitte um eine Rotationsachse herum alternieren, wird in der deutschen Druckschrift DE 10 2005 002 364 B4 offenbart.

In der deutschen Druckschrift DE 10 2005 037 375 A1 wird ein Verfahren zur Bewicklung einer elektrischen Maschine mit verteilten Wicklungen unter Verwendung eines Wicklungshilfskörpers beschrieben, wobei der Wicklungshilfskörper so angeordnet ist, dass er innerhalb eines in Umfangsrichtung verlaufenden Überbrückungsbereichs mindestens eine Nutstirnöffnung abdeckt. Elektrische Leiter werden in eine der Nuten, deren Nutstirnöffnung auf einer Seite eines Überbrückungsbereichs liegt, eingelegt und durch die unabgedeckte Nutstirnöffnung herausgeführt, um anschließend an der Stirnseite mittels des Wickelhilfskörpers umgelenkt und zu einer weiteren unabgedeckten Nutstirnöffnung geführt zu werden.

Allen voranstehend beschriebenen Vorrichtungen und Verfahren aus dem Stand der Technik ist gemeinsam, dass Endscheiben bzw. Isolationsscheiben verwendet werden müssen, um die verteilten Wicklungen zu realisieren. Da derartige Endscheiben jedoch große bzw. voluminöse Wicklungsköpfe bedingen, eignen sich gemäß dem Stand der Technik gewickelte Elektromaschinen nicht für beengte Bauräume.

Weiterhin ergeben sich durch die Verwendung von Endscheiben Nachteile durch unterschiedliche Drahtlängen verschiedener Phasen, die sich auf eine Leistungsdichte einer jeweiligen Elektromaschine negativ auswirken.

Ausgehend von dem beschriebenen Stand der Technik wird ein Verfahren benötigt, das eine präzise Wicklung von Elektromaschinen ermöglicht, so dass Elektromaschinen mit kleinen bzw. kompakten Wickelköpfen mittels verteilter Wicklungen gewickelt werden können.

Vor diesem Hintergrund wird ein Verfahren zur Bewicklung einer Anzahl von Drahtaufnahmen eines Stators und/oder Rotors einer Elektromaschine mit einer Anzahl Drahtlagen, bei dem die Drahtlagen mittels mindestens eines an den Drahtaufnahmen reversibel angeordneten Wicklungshilfswerkzeugs zur Wickelkraftaufnahme und zur Drahtführung in den Stator und/oder den Rotor eingebracht werden, vorgeschlagen, wobei das mindestens eine Wicklungshilfswerkzeug über einen von dem Stator und/oder dem Rotor umschlossenen Klemmmechanismus, der aus Spannzähnen aufgebaut ist, die mit einer Relativbewegung gegenüber dem Stator und/oder dem Rotor an inneren Enden jeweiliger Drahtaufnahmen gespannt werden, wodurch das Wicklungshilfswerkzeug in jeweiligen Drahtaufnahmen des Stators und/oder des Rotors fixiert wird, zur Bewicklung fixiert und das mindestens eine Wicklungshilfswerkzeug nach der Bewicklung unter Lösen des Klemmmechanismus aus der Elektromaschine entfernt wird. Dieses Verfahren ist gekennzeichnet dadurch, dass der Klemmmechanismus mindestens ein verdrehbares Innenteil mit schrägen Nuten umfasst, an denen Bolzen jeweiliger Spannzähne gleiten, so dass eine Verdrehung des mindestens einen Innenteils über die Bolzen eine Radialbewegung der jeweiligen Spannzähne verursacht.

Ausgestaltungen ergeben sich aus der Beschreibung sowie den beiliegenden Zeichnungen.
Das vorgestellte Verfahren dient zur Herstellung einer Elektromaschine, insbesondere eines Elektromotors, indem mindestens ein Wicklungshilfswerkzeug bei einem Wicklungsvorgang einer Anzahl Drahtlagen jeweiliger Spulen verwendet wird, so dass bei dem Wicklungsvorgang entstehende Wickelkräfte, die unter anderem durch Drahtzugkräfte bestimmt werden, durch das mindestens eine Wicklungshilfswerkzeug aufgenommen werden.

Durch das erfindungsgemäß vorgesehene Wicklungshilfswerkzeug wird ferner der Draht während des Wicklungsvorgangs geführt, so dass eine besonders dichte und gleichmäßige Wicklung vollzogen werden kann und eine entsprechend leistungsfähige Spule bzw. Elektromaschine entsteht.

Unter einer Drahtaufnahme bzw. Statornut ist im Kontext der vorliegenden Erfindung eine Aussparung im Material einer jeweiligen Elektromaschine, d. h. bspw. im Stator und/oder Rotor und/oder Anker zu verstehen, die zur Aufnahme von Draht dient und einen in die Drahtaufnahme eingebrachten Draht fixiert.

Es ist vorgesehen, dass das mindestens eine Wicklungshilfswerkzeug bei einem Wicklungsvorgang in dem Stator und/oder dem Rotor einer jeweiligen Elektromaschine angeordnet und nach einem jeweiligen Wicklungsvorgang oder einem entsprechenden Pressvorgang der gewickelten Drahtlagen wieder entfernt wird. Um das mindestens eine Wicklungshilfswerkzeug während des Wicklungsvorgangs zu fixieren und dadurch einen präzisen Wicklungsvorgang zu ermöglichen, ist vorgesehen, dass das mindestens eine Wicklungshilfswerkzeug über einen von dem Stator bzw. Rotor umfassten Klemmmechanismus in jeweiligen Drahtaufnahmen des Stators bzw. Rotors, die bspw. zwischen jeweiligen Statorzähnen liegen, eingeklemmt wird. Dazu ist vorgesehen, dass der von dem Stator bzw. Rotor umfasste Klemmmechanismus rein mechanisch, d. h. ohne externe Energieversorgung funktioniert.

Durch das mindestens eine in den Stator bzw. Rotor eingebrachte bzw. an dem Stator und/oder Rotor angeordnete Wicklungshilfswerkzeug wird für ein automatisches Wicklungsverfahren, bspw. unter Verwendung eines Nadelwicklers, eine dreidimensionale Trajektorie bereitgestellt bzw. vorgegeben, anhand derer das Nadelwerkzeug einen Draht in den Stator bzw. Rotor einbringt.

In einer weiteren möglichen Ausgestaltung des erfindungsgemäßen Verfahrens ist vorgesehen, dass das mindestens eine Wicklungshilfswerkzeug eine durch jeweilige Drahtaufnahmen des Stators bzw. Rotors geführte Anzahl Drahtlagen in einem Wickelkopfbereich des Stators bzw. Rotors radial verbindet, so dass die Anzahl Drahtlagen auf einer durch das mindestens eine Wicklungshilfswerkzeug vorbestimmten Bahn durch den Stator bzw. Rotor verläuft.

Ein möglicher Wicklungsvorgang könnte bspw. so aussehen, dass zunächst für jede Spulengruppe einer ersten Phase zwei Wicklungshilfswerkzeuge, d. h. ein Wicklungshilfswerkzeug pro Stirnseite des Stators in entsprechende Drahtaufnahmen, d. h. bspw. Statornuten des Stators, geklemmt werden, so dass jeweils pro Stirnseite des Stators eine radiale Führung in einem Wickelkopfbereich des Stators entsteht, die von einer ersten zu einer zweiten zu bewickelnden Drahtaufnahme bzw. Statornut reicht.

Im Anschluss an das Anordnen bzw. Verklemmen der Wicklungshilfswerkzeuge an dem Stator und/oder dem Rotor wird die erste Phase gewickelt, und ausgewählte Deckschieber, die jeweilige Drahtaufnahmen nach außen hin verschließen, werden in entsprechende Drahtaufnahmen geschoben. Nach Beendigung des Wicklungsvorgangs der ersten Phase können die beiden Wicklungshilfswerkzeuge wieder entfernt werden oder für einen ggf. folgenden Pressvorgang in der Elektromaschine verbleiben und anschließend, für einen Wicklungsvorgang einer weiteren Phase, versetzt werden. Falls die beiden Wicklungshilfswerkzeuge während eines ggf. vorgesehenen Pressvorgangs in der Elektromaschine verbleiben, sind in den Wicklungshilfswerkzeugen Zugänge vorgesehen, die einem Presswerkzeug einen Kontakt zu den gewickelten Drahtlagen ermöglichen, um diese zu komprimieren.

Es ist möglich, dass alle Drahtaufnahmen oder auch nur ein Teil der Drahtaufnahmen mit Deckschiebern verschlossen werden. Nach Abschluss des Wicklungsvorgangs der ersten Phase kann der Wicklungsvorgang für die zweite Phase entsprechend wiederholt werden, so dass die zweite Phase auf der ersten Phase abgelegt wird. Es ist vorgesehen, dass das Wicklungshilfswerkzeug zwischen den Wicklungsvorgängen der ersten Phase und den Wicklungsvorgängen der zweiten Phase, bzw. einer beliebigen weiteren Phase, aus der Elektromaschine entnommen und an einer anderen Stelle der Elektromaschine wieder eingesetzt wird. Generell ist vorgesehen, dass das Wicklungshilfswerkzeug spätestens nach Beendigung eines letzten Wicklungsvorgangs aus der Elektromaschine entfernt wird.

In einer möglichen Ausgestaltung des erfindungsgemäßen Verfahrens ist vorgesehen, dass jeweilige zu einer Anzahl Phasen zusammengefasste Drahtlagen nach der Bewicklung komprimiert werden.

Um einen Bauraum, der zur Montage einer jeweiligen Elektromaschine benötigt wird, zu reduzieren bzw. Abmaße der jeweiligen Elektromaschine selbst zu minimieren, ist vorgesehen, dass zum automatischen Durchführen des Bewicklungsvorgangs vorgesehene Werkzeuge nach Abschluss des Bewicklungsvorgangs aus der Elektromaschine entfernt werden und nicht, wie im Stand der Technik üblich, als Endscheiben in der Elektromaschine verbleiben.

Da ferner eine Dichte bzw. ein Komprimierungsgrad jeweiliger Spulen Einfluss auf Abmaße und Leistungsdichte, bezogen auf ein Volumen bzw. eine Masse der entsprechenden Elektromaschine nimmt, ist vorgesehen, dass jeweilige mittels des erfindungsgemäß vorgesehenen Wicklungshilfswerkzeugs erzeugte und zu einer Anzahl Phasen zusammengefasste Drahtlagen komprimiert, d. h. bspw. verpresst werden. In einer weiteren möglichen Ausgestaltung des erfindungsgemäßen Verfahrens ist vorgesehen, dass die zu einer Anzahl Phasen zusammengefassten Drahtlagen vor einem Press- bzw. Komprimierungsvorgang mit einem Isolator isoliert werden.

Um jeweilige Phasen vor einem Stromfluss untereinander zu schützen, ist vorgesehen, dass die einzelnen Phasen mit einem Isolator, wie bspw. einem Isolatorpapier, Nomex, NKN oder jedem weiteren technisch geeigneten Isolationsmaterial isoliert werden.

In einer weiteren möglichen Ausgestaltung des erfindungsgemäßen Verfahrens ist vorgesehen, dass die Bewicklung, d. h. der Bewicklungsvorgang, mittels eines Nadelwickelwerkzeugs automatisch durchgeführt wird.

Da das erfindungsgemäße Verfahren einen gegenüber Fehlern robusten Herstellungsprozess bereitstellt, kann ein jeweiliger Wicklungsvorgang, d. h. eine Bewicklung eines jeweiligen Stators und/oder Rotors, mittels verteilter Wicklungen, automatisiert, bspw. unter Verwendung eines Nadelwickelwerkzeugs, erfolgen. Insbesondere aufgrund der Tatsache, dass das erfindungsgemäß vorgesehene Wicklungshilfswerkzeug bei einem Wicklungsvorgang entstehende Wickelkräfte aufnimmt, kann ein automatischer Wicklungsvorgang verlässlich, d. h. mit einer äußerst geringen Fehleranfälligkeit, durchgeführt werden.

Gemäß dem erfindungsgemäßen Verfahren ist vorgesehen, dass der von dem Stator bzw. Rotor umfasste Klemmmechanismus aus Spannzähnen aufgebaut ist, die mit einer Relativbewegung gegenüber dem Stator bzw. Rotor an inneren Enden jeweiliger Drahtaufnahmen gespannt werden. Um ein jeweiliges Wicklungshilfswerkzeug an einem jeweiligen Stator bzw. Rotor anzuordnen bzw. mit diesem zu verklemmen, kann jede technisch geeignete Vorrichtung zum Verklemmen des erfindungsgemäß vorgesehenen Wicklungshilfswerkzeugs in bzw. an einem Stator bzw. Rotor verwendet werden, wobei insbesondere eine Klemmvorrichtung auf Grundlage einer in dem Stator bzw. Rotor zu verschwenkenden Schiene vorgesehen ist, die während eines Schwenkvorgangs mit jeweiligen Spannzähnen verbundene Bolzen drängt bzw. schiebt, so dass die Spannzähne das in bzw. an dem Stator bzw. Rotor anzuordnende erfindungsgemäß vorgesehene Wicklungshilfswerkzeug fest und reversibel verklemmen.

Weiterhin ist gemäß dem erfindungsgemäßen Verfahren vorgesehen, dass der Klemmmechanismus mindestens ein verdrehbares Innenteil mit schrägen Nuten umfasst und das Bolzen an jeweiligen Spannzähnen angeordnet sind, so dass eine Verdrehung des mindestens einen Innenteils über die Bolzen eine radiale Bewegung der jeweiligen Spannzähne verursacht.

In einer weiteren möglichen Ausgestaltung des erfindungsgemäßen Verfahrens ist vorgesehen, dass das mindestens eine Innenteil während der Bewicklung bzw. des Bewicklungsvorgangs durch Kugeldruckstifte in einer gespannten Endposition fixiert wird. Um das erfindungsgemäß vorgesehene Wicklungshilfswerkzeug in einer angeordneten Position an dem Stator bzw. dem Rotor zu fixieren, ist vorgesehen, dass das Innenteil bzw. eine als Innenteil ausgestaltete Schiene während des Bewicklungsvorgangs durch einen Mechanismus, wie bspw. Kugeldruckstifte, die von dem Innenteil in entsprechend vorbereitete Aufnahmen eines Grundkörpers des Wicklungshilfswerkzeugs greifen, fixiert wird.

In einer weiteren möglichen Ausgestaltung des erfindungsgemäßen Verfahrens ist vorgesehen, dass jeweilige Drahtlagen auf dem mindestens einen Wicklungshilfswerkzeug mittels Halteelementen, wie bspw. Laschen, fixiert werden, die an jeweiligen Flanken des mindestens einen Wicklungshilfswerkzeugs aus bzw. eingefahren werden können.

Bei einem Wicklungsvorgang kann es vorkommen, dass jeweils erste Windungen in höheren Phasen von unter den höheren Phasen angeordneten Drähten einer niederen Phase abrutschen und in den Stator bzw. Rotor gleiten, so dass ein suboptimaler Wicklungsvorgang bzw. eine suboptimale Spule entsteht. Um ein derartiges Abrutschen zu vermeiden, ist vorgesehen, dass an einem vorderen Teil des erfindungsgemäß vorgesehenen Wicklungshilfswerkzeugs Laschen angebracht sind, die über eine bspw. rotatorische Bewegung aus dem erfindungsgemäß vorgesehenen Wicklungshilfswerkzeug ausgefahren bzw. in das erfindungsgemäß vorgesehene Wicklungshilfswerkzeug eingefahren werden können. Dazu ist vorgesehen, dass vor Beginn eines jeweiligen Wicklungsvorgangs, insbesondere einer zweiten oder dritten Phase, die Laschen ausgefahren werden, indem bspw. ein Hebel verschoben wird, so dass jeweils erste Windungen des Wicklungsvorgangs durch die Laschen abgestützt werden und ein Abgleiten bzw. Abrutschen der Windungen verhindert wird. Da nachfolgende Windungen wiederum von den entsprechend ersten Windungen gestützt werden, können die Laschen bereits nach einer Anzahl erster Windungen oder nach Beendigung des kompletten Wicklungsvorgangs wieder zurück in das erfindungsgemäß vorgesehene Wicklungshilfswerkzeug eingefahren werden, so dass das erfindungsgemäß vorgesehene Wicklungshilfswerkzeug aus dem Stator bzw. Rotor der Elektromaschine entfernt werden kann.

In einer weiteren möglichen Ausgestaltung des erfindungsgemäßen Verfahrens ist vorgesehen, dass verschiedene Wicklungshilfswerkzeuge mit verschiedenen Einspannlängen für verschiedene Phasen verwendet werden.

Da sich bei Verwendung nur eines Werkzeugtyps für mehrere Phasen von Drahtlagen eine Einspannlänge eines jeweiligen Wicklungshilfswerkzeugs reduziert, erhöht sich entsprechend eine Biegebelastung des Wicklungshilfswerkzeugs aufgrund eines entsprechend vergrößerten Hebelarms. Um einer durch einen größeren Hebelarm bedingten erhöhten Werkzeugbelastung entgegenzuwirken, ist vorgesehen, dass für einen jeweiligen Wicklungsvorgang einer jeweiligen Phase unterschiedliche Wicklungshilfswerkzeuge mit entsprechend angepassten Einspannlängen verwendet werden können.

Ferner umfasst die vorliegende Erfindung ein Wicklungshilfswerkzeug zur Bewicklung einer Anzahl von Drahtaufnahmen eines Stators und/oder Rotors einer Elektromaschine mit einer Anzahl Drahtlagen, wobei das Wicklungshilfswerkzeug derart ausgestaltet ist, dass das Wicklungshilfswerkzeug reversibel in jeweiligen Drahtaufnahmen des Stators und/oder Rotors mittels eines von dem Stator und/oder dem Rotor umschlossenen Klemmmechanismus, der aus Spannzähnen aufgebaut ist, die mit einer Relativbewegung gegenüber dem Stator und/oder dem Rotor an inneren Enden jeweiliger Drahtaufnahmen gespannt werden, wodurch das Wicklungshilfswerkzeug in jeweiligen Drahtaufnahmen des Stators und/oder des Rotors fixiert wird, anzuordnen und nach einer Bewicklung mit Drahtlagen wieder aus der Elektromaschine zu entfernen ist, gekennzeichnet dadurch, dass der Klemmmechanismus mindestens ein verdrehbares Innenteil mit schrägen Nuten umfasst, an denen Bolzen jeweiliger Spannzähne gleiten, so dass eine Verdrehung des mindestens einen Innenteils über die Bolzen eine Radialbewegung der jeweiligen Spannzähne verursacht.

Das erfindungsgemäß vorgesehene Wicklungshilfswerkzeug dient insbesondere zur Ausführung des erfindungsgemäßen Verfahrens.

Weitere Vorteile und Ausgestaltungen der Erfindung ergeben sich aus der Beschreibung und den beiliegenden Zeichnungen.

Es versteht sich, dass die voranstehend genannten und die nachstehen noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnung schematisch und ausführlich beschrieben.
Figur 1 zeigt in schematischer Darstellung eine mögliche Ausgestaltung eines Wicklungshilfswerkzeugs, das in einen Stator einer Elektromaschine eingesetzt werden soll.
Figur 2 zeigt eine mögliche Ausgestaltung einer Anordnung von zwei Wicklungshilfswerkzeugen an einem Stator.
Figur 3 zeigt eine Anzahl möglicher Ausgestaltungen von Wicklungshilfswerkzeugen mit Halteelementen unterschiedlicher Einspannlängen.
Figur 4 zeigt eine mögliche Ausgestaltung der erfindungsgemäß vorgesehenen Klemmvorrichtung in einem Stator.
Figur 5 zeigt eine mögliche Ausgestaltung eines Spannzahns der Klemmvorrichtung aus Figur 4.
Figur 6 zeigt eine mögliche Ausgestaltung eines Wicklungshilfswerkzeugs zum Fixieren von Drahtlagen bei einem Wicklungsvorgang.

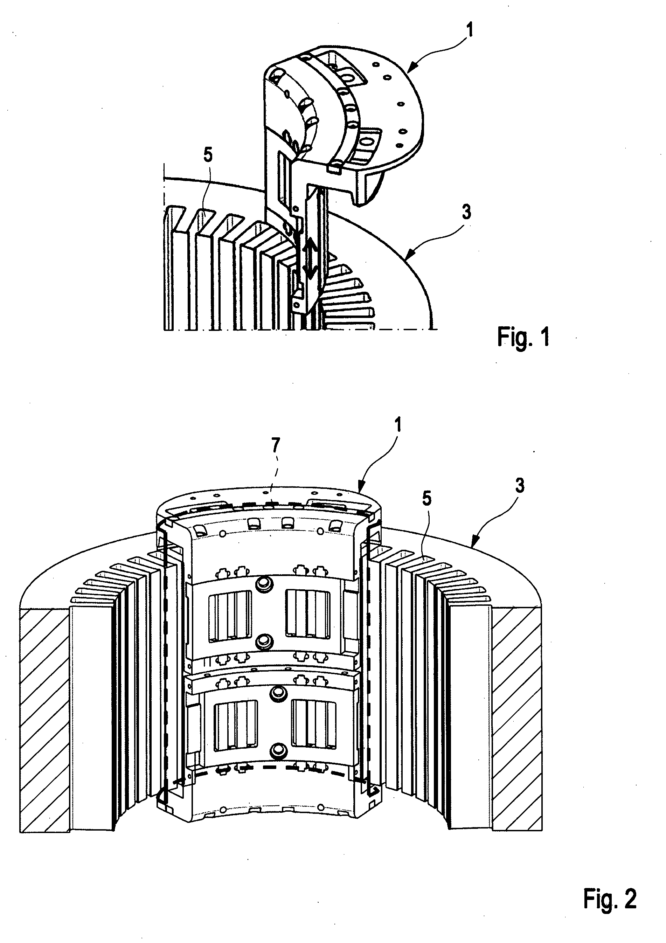

Das in Figur 1 dargestellte Wicklungshilfswerkzeug 1 wird vor einem Wicklungsvorgang eines Drahts durch bspw. einen Nadelwickler in einen Stator 3 eines Elektromotors eingesetzt, indem das Wicklungshilfswerkzeug 1 mittels passender Aufnahmen für Statornuten 5 in den Stator 3 eingebracht wird. Durch Verklemmen des Wicklungshilfswerkzeug 1 in den Statornuten 5 mittels eines Verklemmungswerkzeugs kann das Wicklungshilfswerkzeug 1 fest, d. h. robust gegenüber bei einem Wicklungsvorgang auftretenden Wickelkräften in dem Stator 3 angeordnet werden.

Eine in Figur 2 dargestellte Trajektorie 7 eines zu wickelnden Drahts ergibt sich in Figur 2 aus zwei kombinierten Wicklungshilfswerkzeugen 1, die auf jeweiligen Stirnseiten des Stators 3 angeordnet sind und gemeinsam die Trajektorie 7 bilden, die ein Nadelwickler abzufahren hat, so dass eine entsprechend der Trajektorie 7, gemäß einer radialen Führung in einem jeweiligen Kopfbereich der Wicklungshilfswerkzeuge 1 geformte Spule entsteht. Nachdem eine erste Phase durch den Nadelwickler gewickelt wurde, können ausgewählte Deckschieber in die Statornuten 5 geschoben werden, um diese zu verschließen. Es ist möglich, dass alle Deckschieber oder auch nur einzelne Deckschieber in entsprechend ausgewählte Statornuten 5 geschoben werden. Die Wicklungshilfswerkzeuge 1 können im Anschluss daran entfernt werden. Alternativ dazu können die Wicklungshilfswerkzeuge 1 im Stator 3 vorübergehend für einen Pressvorgang verbleiben. Nachdem die Wicklungshilfswerkzeuge 1 entfernt wurden, kann optional ein Press- bzw. Komprimierungsvorgang durchgeführt werden, der gewickelte Drahtlagen verdichtet und dadurch einen für eine entsprechende Spule benötigten Bauraum reduziert.

Im Anschluss an den ggf. durchgeführten Press- bzw. Komprimierungsvorgang werden die Wicklungshilfswerkzeuge 1 analog der ersten Phase in entsprechende Statornuten 5 für eine zweite Phase geklemmt. Es wird ein erneuter Wicklungsvorgang durchgeführt, so dass die zweite Phase Drahtlagen auf der ersten Phase Drahtlagen abgelegt wird.

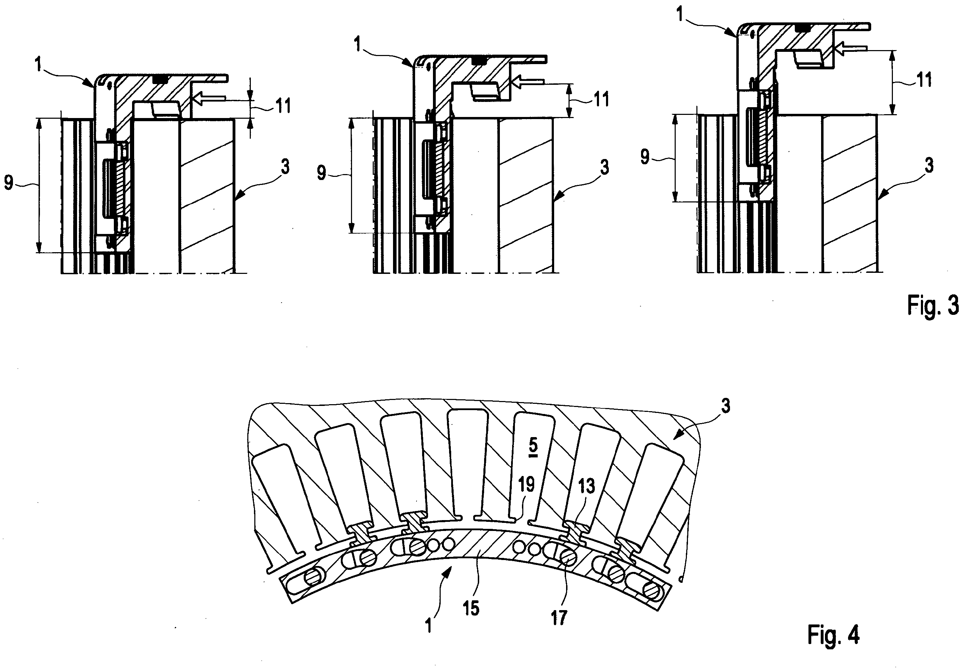

Figur 3 verdeutlicht einen Zusammenhang zwischen Einspannlänge und Biegebelastung. Bei Verwendung nur eines Wicklungshilfswerkzeugtyps für bspw. drei Phasen nimmt eine Einspannlänge 9 der Wicklungshilfswerkzeuge 1 im Stator 3 mit zunehmender Phase bzw. Wickellage, d. h. Drahtlage ab. Durch die Abnahme der Einspannlänge 9 erhöht sich gleichzeitig eine Biegebelastung aufgrund eines größeren Hebelarms der eine Wickelkraft, die bei einem Wicklungsvorgang auftritt, verstärkt. Pfeile 11 zeigen eine Höhe eines Angriffspunkts der Wickelkraft.

Figur 4 zeigt eine mögliche Ausgestaltung eines Klemmmechanismus zum Anordnen bzw. Fixieren des Wicklungshilfswerkzeugs 1 in dem Stator 3 bzw. in jeweiligen Statornuten 5.

Damit die Wicklungshilfswerkzeuge 1 eine Bewicklung bzw. einen Bewicklungsvorgang prinzipiell ermöglichen, müssen die Wicklungshilfswerkzeuge 1 in den Statornuten 5 fest verklemmt werden, so dass bei dem Bewicklungsvorgang auftretende Wickelkräfte nicht zu einem Verrutschen der Wicklungshilfswerkzeuge 1 führen und eine definierte Trajektorie 7 beibehalten wird.

Zum Verklemmen der Wicklungshilfswerkzeuge 1 in den Statornuten 5 sind Spannzähne 13 an dem Wicklungshilfswerkzeug 1 vorgesehen, die durch ein an einem Grundkörper des Wicklungshilfswerkzeus 1 beweglich gelagertes Innenteil 15 in Form bspw. einer Schiene in eine gespannte Position gedrängt werden können, so dass die Spannzähne 13 die Wicklungshilfswerkzeuge 1 in den Statornuten 5 über einen Eingriff mit einem an jeder Statornut 5 ausgebildeten Zahnfuß 19 fixieren. Dazu wirkt das Innenteil 15 bei einem Schwenkvorgang auf Bolzen 17 ein, die wiederum auf die Spannzähne 13 einwirken und diese spannen. Aufgrund der geschlossenen Trajektorie 7 gibt es keine Zugänglichkeit zu den Wicklungshilfswerkzeugen 1 während eines Bewicklungsvorgangs, so dass der beschriebene Klemmmechanismus aus Spannzähnen 13, Innenteil 15 und Bolzen 17 rein mechanisch und ohne externe Energieversorgung funktionieren muss.

Es ist insbesondere vorgesehen, dass das Innenteil 15 mit schrägen Nuten versehen ist, so dass eine Verdrehung des Innenteils 15 eine Radialbewegung der Spannzähne 13 verursacht. Kugeldruckstifte können in einer Endlage des Innenteils 15, ggf. zusammen mit einer Federdruckvorrichtung, für Haltekräfte sorgen.

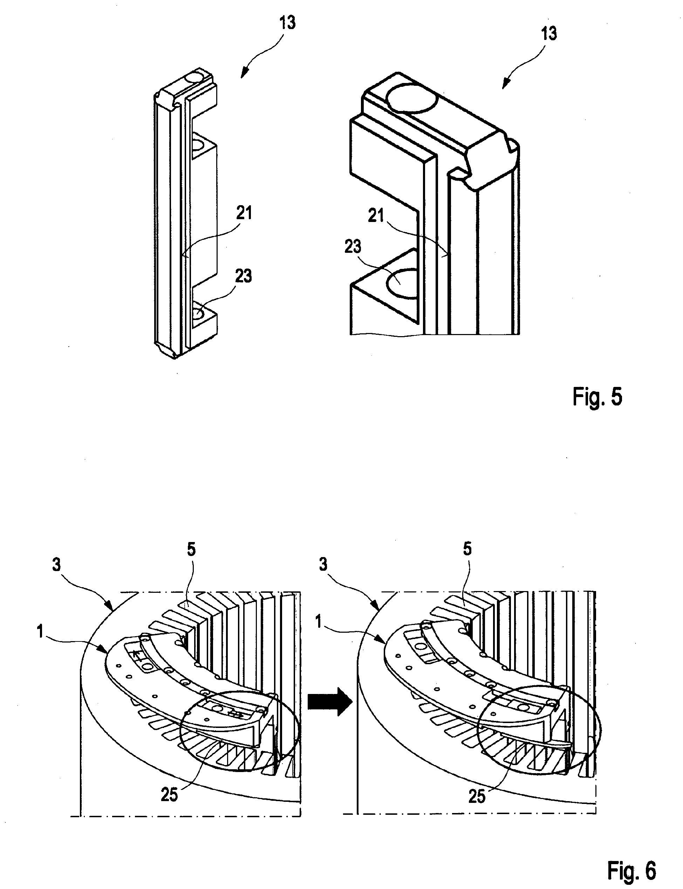

In Figur 5 ist eine Detailansicht eines Spannzahns13 dargestellt. Es ist ersichtlich, dass der Spannzahn 13 eine Einspannfläche 21 zum Einspannen in eine Statornut bzw. einen Statorzahn umfasst. Durch eine Bohrung 23 zum Eingriff des Innenteils 15 in den Spannzahn 13 kann das Innenteil 15 ggf. auf den Spannzahn, bspw. über einen Bolzen 17, einwirken.

Figur 6 zeigt einen weiteren Mechanismus, der verhindern soll, dass jeweils erste Drahtlagen eines Wicklungsvorgangs einer jeweiligen Phase von einem jeweiligen Wicklungshilfswerkzeug abrutschen. Ein Abrutschen von Drahtlagen kann auftreten, da jeweilige zweite oder dritte Phasen auf eine entsprechend vorangegangene Phase aufgewickelt werden. Da die jeweils vorangegangene Phase in der Regel keine plane Auflagefläche bietet, können unter Zug gewickelte Drähte unter das Wicklungshilfswerkzeug 1 rutschen. Derartiges Abrutschen kann dadurch verhindert werden, dass an einem vorderen Teil des jeweiligen Wicklungshilfswerkzeugs 1 Halteelemente 25, wie bspw. Laschen angeordnet werden, die über eine rotatorische Bewegung ein- und ausgefahren werden können, so dass die jeweils ersten Windungen eines Wicklungsvorgangs abgestützt werden können.

Weitere Windungen bzw. Drahtlagen werden von den jeweils ersten Windungen gestützt. Nach Beendigung eines jeweiligen Wicklungsvorgangs werden die Halteelemente 25 wieder eingefahren, so dass das Wicklungshilfswerkzeug 1 aus dem Stator 3 entfernt werden kann.

## Patentansprüche

1. Verfahren zur Bewicklung einer Anzahl von Drahtaufnahmen eines Stators (3) und/oder Rotors einer Elektromaschine mit einer Anzahl Drahtlagen, bei dem die Drahtlagen mittels mindestens eines an den Drahtaufnahmen reversibel angeordneten Wicklungshilfswerkzeugs (1) zur Wickelkraftaufnahme und zur Drahtführung in den Stator (3) und/oder den Rotor eingebracht werden und wobei das mindestens eine Wicklungshilfswerkzeug (1) über einen von dem Stator (3) und/oder dem Rotor umschlossenen Klemmmechanismus, der aus Spannzähnen (13) aufgebaut ist, die mit einer Relativbewegung gegenüber dem Stator (3) und/oder dem Rotor an inneren Enden jeweiliger Drahtaufnahmen (5) gespannt werden, wodurch das Wicklungshilfswerkzeug (1) in jeweiligen Drahtaufnahmen (5) des Stators (3) und/oder des Rotors fixiert wird, zur Bewicklung fixiert und das mindestens eine Wicklungshilfswerkzeug (1) nach der Bewicklung unter Lösen des Klemmmechanismus aus der Elektromaschine entfernt wird, **gekennzeichnet dadurch, dass** der Klemmmechanismus mindestens ein verdrehbares Innenteil (15) mit schrägen Nuten umfasst, an denen Bolzen (17) jeweiliger Spannzähne (13) gleiten, so dass eine Verdrehung des mindestens einen Innenteils (15) über die Bolzen (17) eine Radialbewegung der jeweiligen Spannzähne (13) verursacht.

2. Verfahren nach Anspruch 1, bei dem das mindestens eine Innenteil (15) während der Bewicklung durch Kugeldruckstifte in einer gespannten Endposition fixiert wird.

3. Verfahren nach Anspruch 1 oder 2, bei dem das mindestens eine Innenteil (15) durch einen zusätzlichen Mechanismus in Form eines Federdruckelements in einer gespannten Endposition fixiert wird.

4. Verfahren nach einem der voranstehenden Ansprüche, bei dem das mindestens eine Wicklungshilfswerkzeug (1) eine durch jeweilige Drahtaufnahmen (5) des Stators (3) und/oder des Rotors geführte Anzahl Drahtlagen in einem Wickelkopfbereich des Stators (3) und/oder des Rotors radial verbindet, so dass die Anzahl Drahtlagen auf einer durch das mindestens eine Wicklungshilfswerkzeug (1) vorbestimmten Bahn (7) durch den Stator (3) bzw. Rotor verläuft.

5. Verfahren nach einem der voranstehenden Ansprüche, bei dem jeweilige Drahtlagen auf dem mindestens einen Wicklungshilfswerkzeug (1) mittels Halteelementen (25) fixiert werden, die an jeweiligen Flanken des mindestens einen Wicklungshilfswerkzeugs (1) aus- bzw. eingefahren werden können.

6. Verfahren nach einem der voranstehenden Ansprüche, bei dem verschiedene Wicklungshilfswerkzeuge (1) mit verschiedenen Einspannlängen (9) für verschiedene zu Phasen zusammengefasste Drahtlagen verwendet werden.

7. Verfahren nach einem der voranstehenden Ansprüche, bei dem jeweilige zu einer Anzahl Phasen zusammengefasste Drahtlagen nach der Bewicklung komprimiert werden.

8. Verfahren nach Anspruch 7, bei dem die jeweiligen zu einer Anzahl Phasen zusammengefassten Drahtlagen vor einer Komprimierung mit einem Isolator umgeben werden.

9. Verfahren nach einem der voranstehenden Ansprüche, bei dem die Bewicklung mittels eines Nadelwickelwerkzeugs automatisch durchgeführt wird.

10. Wicklungshilfswerkzeug (1) zur Bewicklung einer Anzahl von Drahtaufnahmen (5) eines Stators (3) und/oder Rotors einer Elektromaschine mit einer Anzahl Drahtlagen, wobei das Wicklungshilfswerkzeug (1) derart ausgestaltet ist, dass das Wicklungshilfswerkzeug (1) reversibel in jeweiligen Drahtaufnahmen (5) des Stators (3) und/oder Rotors mittels eines von dem Stator (3) und/oder dem Rotor umschlossenen Klemmmechanismus, der aus Spannzähnen (13) aufgebaut ist, die mit einer Relativbewegung gegenüber dem Stator (3) und/oder dem Rotor an inneren Enden jeweiliger Drahtaufnahmen (5) gespannt werden, wodurch das Wicklungshilfswerkzeug (1) in jeweiligen Drahtaufnahmen (5) des Stators (3) und/oder des Rotors fixiert wird, anzuordnen und nach einer Bewicklung mit Drahtlagen wieder aus der Elektromaschine zu entfernen ist, **gekennzeichnet dadurch, dass** der Klemmmechanismus mindestens ein verdrehbares Innenteil (15) mit schrägen Nuten umfasst, an denen Bolzen (17) jeweiliger Spannzähne (13) gleiten, so dass eine Verdrehung des mindestens einen Innenteils (15) über die Bolzen (17) eine Radialbewegung der jeweiligen Spannzähne (13) verursacht.

## Claims

1. Method for winding a number of wire mounts of a stator (3) and/or rotor of an electric machine with a number of wire layers, in which the wire layers are introduced by means of at least one additional winding tool (1) arranged reversibly on the wire mounts for receiving the winding force and for guiding the wires into the stator (3) and/or the rotor and wherein the at least one additional winding tool (1) is fixed for winding by a clamping mechanism surrounded by the stator (3) and/or the rotor, which clamping mechanism is formed by tensioning teeth (13), which are tensioned with a relative movement relative to the stator (3) and/or the rotor at inner ends of respective wire mounts (5), whereby the additional winding tool (1) is fixed in respective wire mounts (5) of the stator (3) and/or the rotor, and the at least one additional winding tool (1) is removed after the winding by releasing the clamping mechanism from the electric machine, **characterised in that** the clamping mechanism comprises at least one rotatable inner part (15) with skewed grooves on which bolts (17) of respective tensioning teeth (13) slide so that a rotation of the at least one inner part (15) over the bolts (17) causes a radial movement of the respective tensioning teeth (13).

2. Method according to claim 1, in which the at least one inner part (15) is fixed during the winding by ball pressure pins in a tensioned end position.

3. Method according to claim 1 or 2, in which the at least one inner part (15) is fixed by an additional mechanism in the form of a spring-loaded element in a tensioned end position.

4. Method according to any of the preceding claims, in which the at least one additional winding tool (1) radially connects a number of wire layers guided by respective wire mounts (5) of the stator (3) and/or the rotor in a winding head region of the stator (3) and/or the rotor, so that the number of wire layers runs through the stator (3) or rotor on a pathway (7) predetermined by the at least one additional winding tool (1).

5. Method according to any of the preceding claims, in which respective wire layers are fixed on the at least one additional winding tool (1) by means of retaining elements (25), which can be pulled out or in on respective flanks of the at least one additional winding tool (1).

6. Method according to any of the preceding claims, in which different additional winding tools (1) are used with different clamping lengths (9) for different wire layers combined into phases.

7. Method according to any of the preceding claims in which respective wire layers combined into a number of phases are compressed after the winding.

8. Method according to claim 7, in which the respective wire layers combined into a number of phases are surrounded with an insulator before compression.

9. Method according to any of the preceding claims, in which the winding is performed automatically by means of a needle winding tool.

10. Additional winding tool (1) for winding a number of wire mounts (5) of a stator (3) and/or rotor of an electric machine with a number of wire layers, wherein the additional winding tool (1) is configured such that the additional winding tool (1) is designed to be arranged reversibly in respective wire mounts (5) of the stator (3) and/or rotor by means of a clamping mechanism, formed of tensioning teeth (13), surrounded by the stator (3) and/or the rotor, which tensioning teeth are tensioned with a relative movement relative to the stator (3) and/or the rotor at inner ends of respective wire mounts (5), whereby the additional winding tool (1) is fixed in respective wire mounts (5) of the stator (3) and/or the rotor and, after winding with wire layers, to be removed again from the electric machine, **characterised in that** the clamping mechanism comprises at least one rotatable inner part (15) with skewed grooves, on which bolts (17) of respective tensioning teeth (13) slide so that a rotation of the at least one inner part (15) over the bolts (17) causes a radial movement of the respective tensioning teeth (13).

## Revendications

1. Procédé d'enroulement d'un certain nombre de logements de fil d'un stator (3) et/ou d'un rotor d'une machine électrique avec un certain nombre de couches de fil, dans lequel les couches de fil sont mises en place dans le stator (3) et/ou le rotor au moyen d'au moins un outil auxiliaire d'enroulement (1) agencé de manière réversible au niveau des logements de fil en vue d'une absorption de force d'enroulement et en vue d'un guidage de fil et dans lequel le au moins un outil auxiliaire d'enroulement (1) est immobilisé en vue de l'enroulement par l'intermédiaire d'un mécanisme de serrage, entouré par le stator (3) et/ou le rotor, qui est constitué de dents de serrage (13) qui sont mises en tension au niveau d'extrémités intérieures de logements de fil (5) respectifs avec un mouvement relatif par rapport au stator (3) et/ou au rotor, grâce à quoi l'outil auxiliaire d'enroulement (1) est immobilisé dans des logements de fil (5) respectifs du stator (3) et/ou du rotor et le au moins un outil auxiliaire d'enroulement (1) est retiré de la machine électrique par desserrage du mécanisme de serrage après l'enroulement, **caractérisé en ce que** le mécanisme de serrage comprend au moins une partie interne (15) rotative avec des rainures obliques au niveau desquelles coulissent des chevilles (17) de dents de serrage (13) respectives, de sorte qu'une rotation de la au moins une partie interne (15) par l'intermédiaire des chevilles (17) provoque un mouvement radial des dents de serrage (13) respectives.

2. Procédé selon la revendication 1, dans lequel la au moins une partie interne (15) est immobilisée dans une position finale en tension pendant l'enroulement grâce à des broches de pression à bille.

3. Procédé selon la revendication 1 ou 2, dans lequel la au moins une partie interne (15) est immobilisée dans une position finale en tension grâce à un mécanisme supplémentaire se présentant sous la forme d'un élément de pression à ressort.

4. Procédé selon l'une quelconque des revendications précédentes, dans lequel le au moins un outil auxiliaire d'enroulement (1) relie de manière radiale dans une région de tête d'enroulement du stator (3) et/ou du rotor un certain nombre de couches de fil guidées grâce à des logements de fil (5) respectifs du stator (3) et/ou du rotor, de sorte que ledit nombre de couches de fil passe à travers le stator (3) ou le rotor par un chemin prédéterminé (7) grâce au au moins un outil auxiliaire d'enroulement (1).

5. Procédé selon l'une quelconque des revendications précédentes, dans lequel des couches de fil respectives sont immobilisées sur le au moins un outil auxiliaire d'enroulement (1) au moyen d'éléments de retenue (25) qui peuvent être étendus ou rétractés au niveau de flancs respectifs du au moins un outil auxiliaire d'enroulement (1).

6. Procédé selon l'une quelconque des revendications précédentes, dans lequel différents outils auxiliaires d'enroulement (1) avec différentes longueurs de serrage (9) sont utilisés pour différentes couches de fil combinées en phases.

7. Procédé selon l'une quelconque des revendications précédentes, dans lequel des couches de fil respectives combinées en un certain nombre de phases sont comprimées après l'enroulement.

8. Procédé selon la revendication 7, dans lequel les couches de fil respectives combinées en un certain nombre de phases sont entourées avec un isolant avant une compression.

9. Procédé selon l'une quelconque des revendications précédentes, dans lequel l'enroulement est mis en œuvre de manière automatique au moyen d'un outil d'enroulement à aiguille.

10. Outil auxiliaire d'enroulement (1) destiné à l'enroulement d'un certain nombre de logements de fil (5) d'un stator (3) et/ou d'un rotor d'une machine électrique avec un certain nombre de couches de fil, dans lequel l'outil auxiliaire d'enroulement (1) est conçu de telle manière que l'outil auxiliaire d'enroulement (1) doit être agencé de manière réversible dans des logements de fil (5) respectifs du stator (3) et/ou du rotor au moyen d'un mécanisme de serrage, entouré par le stator (3) et/ou le rotor, qui est constitué de dents de serrage (13) qui sont mises en tension au niveau d'extrémités intérieures de logements de fil (5) respectifs avec un mouvement relatif par rapport au stator (3) et/ou au rotor, grâce à quoi l'outil auxiliaire d'enroulement (1) est immobilisé dans des logements de fil (5) respectifs du stator (3) et/ou du rotor, et doit à nouveau être retiré de la machine électrique après un enroulement avec des couches de fil, **caractérisé en ce que** le mécanisme de serrage comprend au moins une partie intérieure (15) rotative avec des rainures obliques au niveau desquelles coulissent des chevilles (17) de dents de serrage (13) respectives, de sorte qu'une rotation de la au moins une partie interne (15) par l'intermédiaire des chevilles (17) provoque un mouvement radial des dents de serrage (13) respectives.
